Europäisches Patentamt

(19) European Patent Office

Office européen des brevets

(11) Publication number: **0 211 811**

**B1**

# EUROPEAN PATENT SPECIFICATION

(45) Date of publication of the patent specification: 25.01.89

(51) Int. Cl.⁴: **B 60 T 8/42**

(21) Application number: **86830166.4**

(22) Date of filing: **13.06.86**

(54) **Hydraulic braking circuit with pneumatic vacuum servocontrol and pneumo-hydraulic anti-locking device for motor vehicles wheels.**

(30) Priority: **02.08.85  IT 6771085**

(43) Date of publication of application: **25.02.87 Bulletin 87/9**

(45) Publication of the grant of the patent: **25.01.89 Bulletin 89/4**

(84) Designated Contracting States: **DE FR GB SE**

(56) References cited:
**DE-A-2 010 975**
**DE-A-2 437 211**
**US-A-3 724 915**
**US-A-4 071 283**
**US-A-4 095 851**

(73) Proprietor: **FIAT AUTO S.p.A., Corso Giovanni Agnelli 200, I-10135 Torino (IT)**

(72) Inventor: **Bertone, Antonino, Via Livorno Ferraris 50, I-13040 S. Antonino di Saluggia Vercelli (IT)**
Inventor: **Ippolito, Luigi, Via A. Vespucci 73, I-10129 Torino (IT)**

(74) Representative: **Notaro, Giancarlo, c/o Jacobacci-Casetta & Perani S.p.A. Via Alfieri, 17, I-10121 Torino (IT)**

LIBER, STOCKHOLM 1989

## Description

The present invention relates to a hydraulic braking circuit with pneumatic vacuum servocontrol for motor vehicle wheels, including a master cylinder connected to the brakes and actuated by means of a pedal through a pneumatic vacuum cylinder having a first chamber connected to a vacuum source and a second chamber normally communicating with the first chamber and arranged to be isolated from the first chamber and put into communication with the atmosphere on operation of the brake pedal, and in which the hydraulic circuit has an associated anti-locking device for the wheels, including a solenoid valve interposed between the master cylinder and the brakes and arranged to interrupt the braking action temporarily and to connect the hydraulic circuit to a discharge line should the wheels lock, the solenoid valve being piloted by an electronic control unit associated with means for sensing the rotational speed of the wheels.

The present anti-locking devices associated with braking circuits are arranged to actuate the solenoid valve connected in the hydraulic circuit both when the brakes are first released due to the first locking of the wheels, and each time the brakes are released subsequently during the operation of the device.

Hydraulically-operated anti-locking devices have remarkably small response times, of the order of 50 milliseconds, but are extremely expensive and complex. Indeed, the large number of components, among them a special pump and pressure reservoir, make the use of such devices suitable only for high class or high performance motor vehicles.

In order to avoid these disadvantages, anti-locking devices which are entirely pneumatically operated have also been tried, but have response times which are approximately four times longer than those of hydraulic devices, though at a definitely lower cost. Such devices are used in industrial vehicles and trailers of industrial vehicles.

The object of the present invention is to provide an anti-locking device which has the advantages of both hydraulic and pneumatic devices, without their disadvantages. In other words, the purpose of this invention is to provide an anti-locking device which has response times comparable to those of hydraulic devices, at a cost comparable to that of pneumatic devices.

According to the invention, this object is achieved by virtue of the fact that the anti-locking device includes a pneumo-hydraulic actuator connected in the discharge line of the solenoid valve of the hydraulic circuit and operated by the electronic control unit through a pneumatic circuit connected to the servocontrol pneumatic vacuum cylinder, so as to realise, after the initial interruption of the braking action by the solenoid valve, cycles of braking and brake release, by means of the closure and pressurising of the said discharge line and the opening thereof.

By virtue of the above characteristics, the action of releasing the brakes at the moment of initial locking of the wheels is fast, in that it is effected by the solenoid valve in the hydraulic circuit, as in wholly hydraulic anti-locking devices. The subsequent actions of releasing the brakes and of braking are controlled by the pneumo-hydraulic actuator, in the manner clarified below, by means of the vacuum existing in the servobrake, and hence in a simple and economical way, without the need to employ any auxiliary pumps or pressure reservoirs. Furthermore, being installed in parallel with the braking circuit, the said pneumo-hydraulic actuator does not operate during normal braking operations in which no locking of the wheel occurs.

The pneumo-hydraulic actuator may be connected to both chambers of the servobrake pneumatic vacuum cylinder, or only to the first chamber, with the interposition of a hydro-pneumatic regulator connected to the atmosphere.

In the first case, the pneumo-hydraulic actuator includes a pneumatic vacuum cylinder which is divided by a movable partition into first and second chambers connected to the said first chamber of the servocontrol pneumatic cylinder, the first chamber of the cylinder of the pneumo-hydraulic actuator being connectible to the second chamber of the servocontrol pneumatic cylinder and the movable partition actuating an on-off valve in the discharge line of the solenoid valve, and a piston pump for pressurising the said discharge line, a solenoid valve of the pneumatic circuit which controls the communication between the chambers of the pneumatic cylinder of the pneumo-hydraulic actuator and the servocontrol pneumatic cylinder, and is piloted by the said electronic control unit, following the initial interruption of the braking action effected by the solenoid valve of the hydraulic circuit, between a first position, in which the second chamber of the servocontrol pneumatic cylinder is isolated from the pneumatic cylinder of the pneumo-hydraulic actuator so as to keep the on-off valve open, and a second position in which the communication between the second chamber of the servocontrol pneumatic cylinder and the first chamber of the pneumatic cylinder of the pneumo-hydraulic actuator is opened to allow the closure of the on-off valve and the operation of the piston pump.

In the second case, the pneumo-hydraulic actuator includes a pneumatic vacuum cylinder divided by a movable partition into first and second chambers connected to the said first chamber of the servocontrol pneumatic cylinder, the first chamber also being connectible to the atmosphere and the movable partition actuating an on-off valve in the discharge line of the solenoid valve of the hydraulic circuit, and a piston pump for pressurising the said discharge line, a hydro-pneumatic regulator inserted in the connection between the first chamber of the pneumatic vacuum cylinder and the atmosphere and piloted by the master cylinder, a solenoid valve of the pneumatic circuit that controls the communication between the chambers of the pneumatic cylinder of the pneumo-hydraulic actuator and the first chamber of the servocontrol pneumatic cylinder, as well as the communication between the first chamber of the pneumatic cylinder of the pneumo-hydraulic actuator and the hydro-pneumatic regulator, the solenoid valve being piloted by the said electronic control unit, following the initial interruption of the braking action effected by the solenoid valve of the hydraulic circuit, between a first position in which the hydro-pneumatic regulator is isolated from the pneumatic cylinder of the pneumo-hydraulic actuator so as to keep the on-off valve open, and a second position in which the communication between the hydro-pneumatic regulator and the first chamber of the pneumatic cylinder of the pneumo-hydraulic actuator is opened to allow the closure of the on-off valve and the operation of the piston pump.

The first case has the advantage of providing an anti-locking device with a reduced number of components at the expense of a more complex pneumatic circuit.

In the second case, the greater simplicity of the pneumatic circuit is countered by the need to use the said hydro-pneumatic regulator.

Further advantages and characteristics of the anti-locking device of the invention will become evident from the following detailed description, provided purely by way of non-limiting example, with reference to the appended drawings, in which:

- Figure 1 is a diagram of the braking circuit with an anti-locking device according to the first embodiment,
- Figure 2 is a diagram of the braking circuit and an anti-locking device according to another embodiment, and
- Figure 3 is a perspective view of a practical form of the device according to the second embodiment.

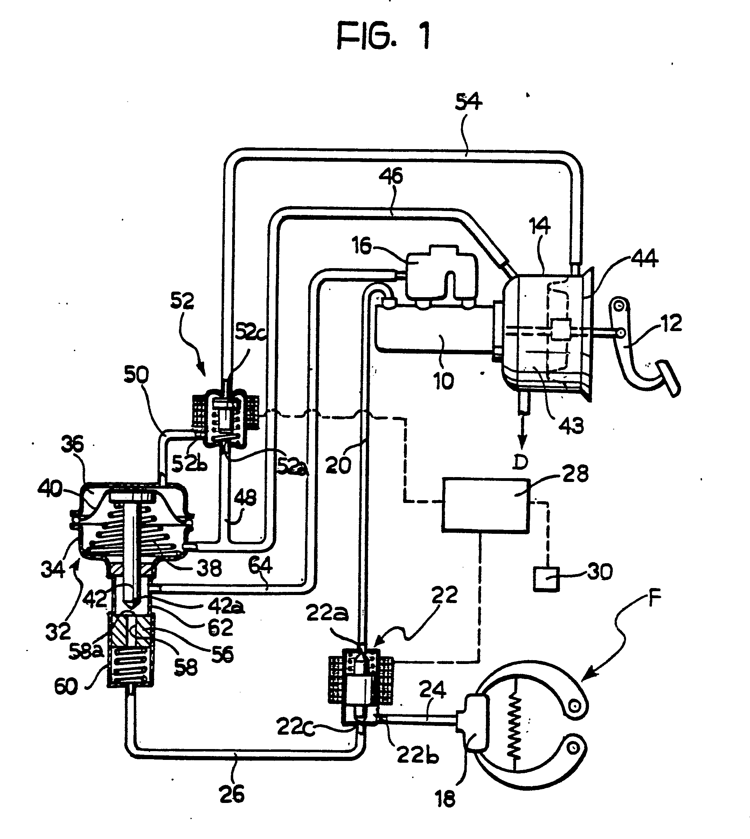

With reference to the drawings, reference numeral 10 indicates a master cylinder of a hydraulic braking circuit for motor vehicle brakes F, operated by a brake pedal 12 through a vacuum servobrake of known type including a pneumatic cylinder 14. The master cylinder 10 is connected to a supply reservoir 16 and to hydraulic actuators 18 of the brakes F by a pipeline 20. Figure 1 shows only one pipeline 20, but it will be clear to any expert in this field that the hydraulic circuit normally uses two independent hydraulic transmissions, one for the front brakes and the other for the rear brakes; another solution is to use two independent hydraulic transmissions installed "diagonally" or a hydraulic transmission for each wheel of the motor vehicle.

In the example illustrated, the main pipeline 20 is connected through a solenoid valve 22, to a pipe 24 terminating at a conventional hydraulic braking actuator 18. The valve 22 is of a three-way type connected at 22a to the pipeline 20, at 22b to the pipe 24, and at 22c to a discharge line 26 connected to the reservoir 16.

The solenoid valve 22 is controlled by an electronic unit 28 supplied with electrical signals from conventional sensors 30 for detecting the rotational speed of the wheels. Normally this valve 22 is maintained in a de-energised condition, corresponding to the configuration illustrated in Figure 1, in which it closes the way 22c.

A pneumo-hydraulic actuator 32 is inserted in the discharge line 26, the actuator having a pneumatic cylinder 34 including a first chamber 36 and a second chamber 38 divided by a resilient partition 40 connected to a shaft 42. The servobrake pneumatic cylinder 14 has a first chamber 43 connected to a vacuum source D (usually the intake manifold of the vehicle's engine) and a second chamber 44 which, as known, communicates with the chamber 43 when the brake pedal 12 is not actuated and is put into communication with the atmosphere when the pedal is actuated.

The first chamber 43 of the servobrake pneumatic cylinder communicates with the second chamber 38 of the pneumo-hydraulic actuator 32 through a pipe 46. The pipe 46 is also connected by means of a first pipe 48 and a second pipe 50 to the first chamber 36 of the pneumo-hydraulic actuator. A three-way solenoid valve 52 is connected between the pipes 48 and 50, its first way 52a being connected to the pipe 48, its second way 52b being connected to the pipe 50 and its third way 52c being connected to the pipe 54 which communicates with the second chamber 44 of the sevobrake pneumatic cylinder 14. The solenoid valve 52 is normally de-energised, as shown in the configuration of Figure 1, in which it closes the way 52c and is controlled by the electronic unit 28 in the manner explained below.

The pneumo-hydraulic actuator 32 includes, in its hydraulic part, a piston 56 with a central hole in correspondence with the piston 42. The piston 56 slides in a cylinder 60 communicating with the discharge line 26.

The piston rod 42 has an end 42a defining an obturator extending into a chamber 62 connected to, and on the axis of, the cylinder 60 on the opposite side from the piston 56. The chamber 62 communicates with the hydraulic liquid reservoir 16 by means of a pipe 64, the obturator 42a being normally spaced from the piston 56 and arranged to cooperate, in the manner explained below, with an annular valve seat 58a defined by the end of the hole 58 facing the chamber 62.

The operation of the device of Figure 1 will now be described.

When the pedal 12 is not operated, the entire hydraulic circuit represented by the pipes 20, 24, 26 and 64 is at a zero relative pressure whilst the pneumatic circuit represented by the pipes 46, 54, 50, 48 and 46 is in Vacuum, communicating with the source D.

Upon operation of the brake pedal 12, the master cylinder 10 pressurises the pipelines 20 and 24, actuating the hydraulic actuator 18 of the brakes F. If the wheels are not locked by the braking, the hydraulic circuit downstream of the three-way valve 22, the way 22c being closed by the valve 22, remains at the zero relative pressure. During the braking, the second chamber 44 of the pneumatic cylinder 14 of the servobrake is put into communication with the atmosphere in such a way that the pipe 54 is also at atmospheric pressure. The way 52c of the three-way valve 52 being closed, the pressure does not act on the pneumo-hydraulic actuator, which remains inoperative.

Should the wheels lock, the sensor means 30 transmit a corresponding signal to the electronic control unit 28 which commands the energising of the 3-way valve 22 so as to close the way 22a and open the way 22c, thus permitting the hydraulic pressure in the hydraulic actuator 18 and in the pipeline 24 to discharge through the line 26, the hole 58 in the plunger 56 and the pipe 64 into the reservoir 16.

Subsequently, when the wheel or wheels start turning again, no longer being braked by the brake F, the sensor means 30 transmit a corresponding signal to the electronic control unit 28 which energises the solenoid valve 52 so as to open the way 52c and close the way 52a. Consequently, the first chamber 36 of the pneumo-hydraulic actuator is brought to atmospheric pressure by means of the pipelines 50 and 54 and the second chamber 43 of the servobrake pneumatic cylinder 14, whilst the second chamber 38 of the pneumo-hydraulic actuator 32 remains in communication through the pipeline 46 with the first chamber 43 of the servobrake 14 which is under vacuum. The difference in pressure between the first chamber 36 and the second chamber 38 and the pneumo-hydraulic actuator causes a corresponding movement of the movable partition 40 and, consequently, of the piston rod 42 connected thereto towards the apertured piston 56. The obturator 42a of the piston rod 42 enters the cylinder 62 until it closes the valve seat 58a of the piston 56. Communication between the cylinder 60 and the chamber 62 is thus cut off. In continuing its movement, the piston rod 62 acts on the piston 56 so as to pressurise the hydraulic fluid in the cylinder 60 and, correspondingly, actuate the hydraulic actuator 18 of the brake F by means of the pipelines 26 and 24, the way 22c of the 3-way solenoid valve 22 remaining open. Thus, the actuation of the pedal 12 being continued, braking is achieved through the pneumo-hydraulic actuator 32 and its pneumatic circuit.

During this braking effected by the pneumo-hydraulic actuator 32, the wheel or wheels could again lock. Should this happen, the electronic control unit 28 de-energises the solenoid valve 52 so as to close the way 52c and put both the chambers 36 and 38 of the pneumo-hydraulic actuator 32 in communication with the vacuum in the first chamber 43 of servobrake 14. The piston rod 42 thus returns to its initial position, reopening the connection between the cylinder 60 and the chamber 62 through the hole 58 in the piston 56. The pressure in the hydraulic actuator 18 and the pipelines 24 and 26 is thus again discharged through the hole 58 and pipeline 64 into the reservoir 16.

It is evident that, once the or each wheel has started to rotate again, the electronic control unit 28 will again energise the solenoid valve 52 so as to effect a cyclic series of braking and releasing of the brakes, executed entirely by the pneumo-hydraulic actuator 32 and the associated solenoid valve 52. During these cycles, the solenoid valve 22 will continue to be energised so as to keep the way 22a to the master cylinder 10 closed.

When the vehicle reaches a sufficiently low speed, for example of the order of 10 km/h, the electronic control unit 28 immediately de-energises the solenoid valve 22 so as to close the way 22c. Thus the pneumo-hydraulic actuator is isolated from the brakes F.

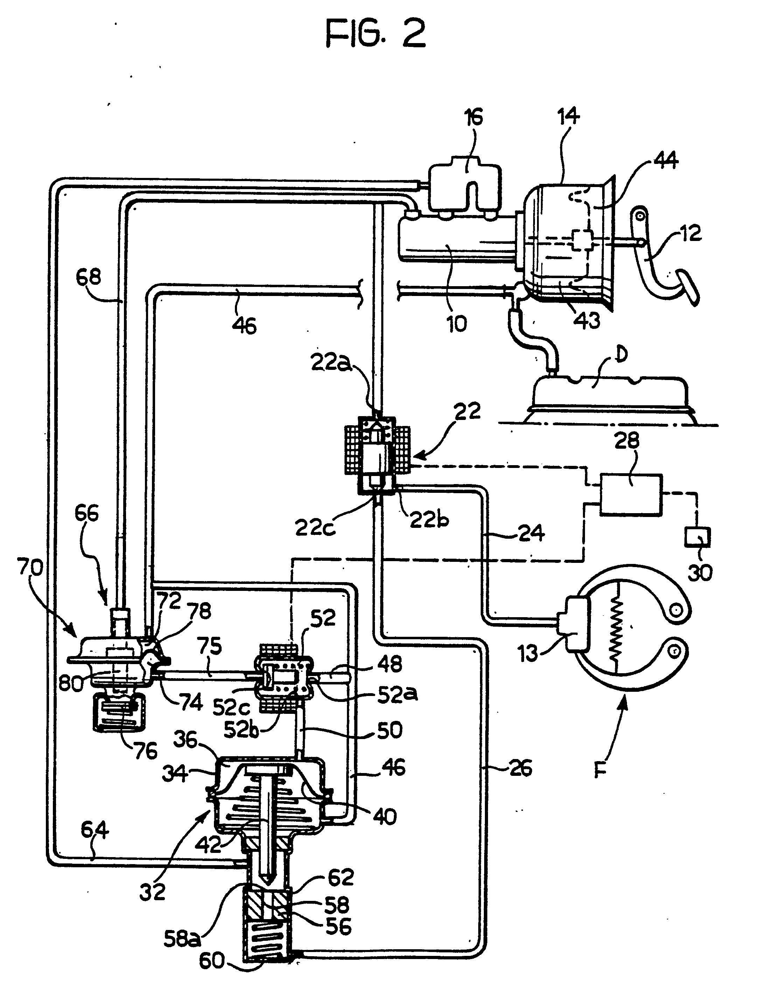

According to another embodiment, illustrated in Figure 2 (in which parts identical to or similar to those already described with reference to Figure 1 are indicated by the same reference numerals), the pneumo-hydraulic actuator 32 is connected to a hydro-pneumatic regulator 66 which communicates through the hydraulic pipeline 68 with the master cylinder 10. The hydro-pneumatic regulator 66 includes a pneumatic cylinder 70 with a first chamber 72 and a second chamber 74. The first chamber 72 communicates with the pipeline 46 whilst the second chamber 74 communicates with the pipeline 75 connected to the way 52c of the solenoid valve 52 which is normally closed. The second chamber 74 of the hydro-pneumatic regulator 66 is connectible to the atmosphere through an obturator 78 which is normally closed. A diaphragm 78 within the pneumatic cylinder 70 separates the first and second chambers from each other. As in known vacuum servobrakes, in correspondence with the resilient diaphragm 78, there is a piston-valve 80 actuated by the pressure in the pipeline 68 on operation of the pedal 12. Summing up, in this second embodiment of the present invention, the pneumatic connecting pipeline 54 of Figure 1 is replaced by the hydro-pneumatic regulator 66 connectible to the atmosphere and operated hydraulically by means of the master cylinder 10. The other components of the hydraulic and pneumatic circuit are entirely similar to those of the first embodiment described above with reference to Figure 1.

In operation, when the brake pedal 12 is not actuated, the entire hydraulic circuit is at zero relative pressure, whilst the entire pneumatic circuit, including the chambers 72 and 74 of the hydro-pneumatic regulator, and the chambers 36 and 38 of the pneumo-hydraulic actuator, is under vacuum.

When the brake pedal 12 is actuated, the piston-valve 80 of the hydro-pneumatic regulator 66 is urged by the pressure in the pipeline 68 so as gradually to cut off the communication between the first chamber 72 and the second chamber 74 of the regulator, subsequently actuating the obturator 76 to put the chamber 74 in communication with the atmosphere. Thus, the pressure in the pipeline 75 gradually increases with the force exerted on the brake pedal 12 up to a maximum value equal to that of atmospheric pressure. The realisation of cycles of braking and brake-release and locking of the wheels is similar to that described for the embodiment of Figure 1. In the embodiment of Figure 2 as well, after the initial release of the brakes due to the action of the solenoid valve 22, the subsequent actions of braking and brake-release are effected by the pneumo-hydraulic actuator 32 controlled by the solenoid valve 52. To effect braking, the solenoid valve 52 is energised so as to close the way 52a and open the way 52c so as to establish communication between the first chamber 36 of the pneumo-hydraulic actuator 32 and the second chamber 74 of the hydro-pneumatic regulator 32, in which there is a pressure between that in the vacuum source (induction manifold) and atmospheric pressure, modulated by the braking action exerted on the pedal 12 by the master cylinder 10 and the pipeline 68. In order to achieve the second and subsequent release of the brakes in the anti-locking braking cycles, the solenoid valve 52 is de-energised so as to reestablish the pressure equilibrium in the chambers 36 and 38 of the pneumo-hydraulic actuator.

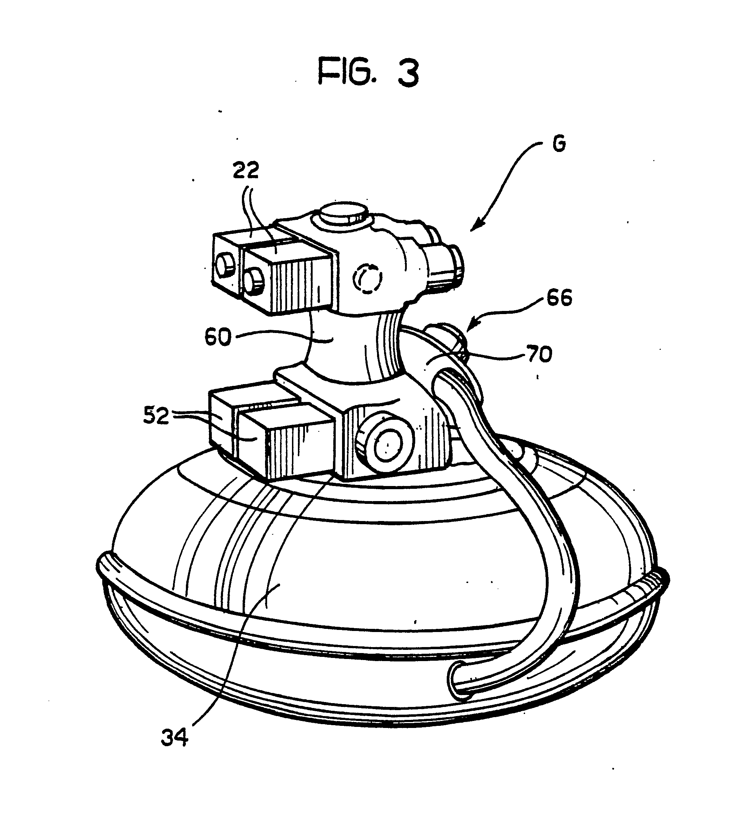

As illustrated in Figure 3, all the components of the device of the invention may be combined, to advantage, in a single assembly G of small size and bulk. In Figure 3, which relates to the second embodiment, the components of the device corresponding to those illustrated in Figure 2 have been indicated by the same reference numerals.

It is understood that, as long as the principle of the invention is maintained, the constructional details and embodiments may be varied widely with respect to those described and illustrated without thereby departing from the scope of the present invention.

## Claims

1. A hydraulic braking circuit with pneumatic vacuum servocontrol for motor vehicle wheels, including a master cylinder (10) connected to the brakes (F) and actuated by means of a pedal (12) through a pneumatic vacuum cylinder (14) having a first chamber (43) connected to a vacuum source (D) and a second chamber (44) normally communicating with the first chamber (43) and arranged to be isolated from the first chamber and to be put in communication with the atmosphere on operation of the brake pedal (12), and in which the hydraulic circuit has an associated anti-locking device for the wheels including a solenoid valve (22) interposed between the master cylinder (10) and the brakes (F) and arranged to interrupt the braking action temporarily and to connect the hydraulic circuit to a discharge line (26) should the wheels lock, the solenoid valve (22) being piloted by an electronic control unit (28) associated with means (30) for sensing the rotational speed of the wheels, characterised in that the anti-locking device includes a pneumo-hydraulic actuator (32) connected in the discharge line (26) of the solenoid valve (22) of the hydraulic circuit and operated by the electronic control unit (28) through a pneumatic circuit connected to the servocontrol pneumatic vacuum cylinder (14) so as to realise, after the initial interruption of the braking action by the solenoid valve (22), cycles of braking and brake release by means of the closure and pressurising of the said discharge line (26) and the opening of the discharge line (26).

2. Circuit according to claim 1, characterised in that the pneumo-hydraulic actuator includes:
   - a pneumatic vacuum cylinder (34) which is divided by a movable partition (40) into first and second chambers (36, 38) connected to the said first chamber (43) of the servocontrol pneumatic cylinder (14), the first chamber (36) of the cylinder (34) of the pneumo-hydraulic actuator (32) being connectible to the second chamber (44) of the servocontrol pneumatic cylinder (14) and the movable partition (40) actuating an on-off valve (42a, 58a) in the discharge line (26) of the solenoid valve (22), and a piston pump (42, 56) for pressurising the said discharge line (26),
   - a solenoid valve (52) of the pneumatic circuit which controls the communication between the chambers (36, 38) of the pneumatic cylinder (34) of the pneumo-hydraulic actuator (32) and the servocontrol pneumatic cylinder (14), and is piloted by the said electronic control unit (28) following the initial interruption of the braking action effected by the solenoid valve (22) of the hydraulic circuit between a first position, in which the second chamber (44) of the servocontrol pneumatic cylinder (14) is isolated from the pneumatic cylinder (34) of the pneumo-hydraulic actuator (32) so as to keep the on-off valve (42a, 58a) open, and a second position in which the communication between the second chamber (44) of the servocontrol pneumatic cylinder (14) and the first chamber (36) of the pneumatic cylinder (34) of the pneumo-hydraulic actuator (32) is opened to allow the closure of the on-off valve (42a, 58a) and the operation of the piston pump (42, 56).

3. A circuit according to claim 1, characterised in that the pneumo-hydraulic actuator (32) includes:

- a pneumatic vacuum cylinder (34) divided by a movable partition (40) into first and second chambers (36, 38) connected to the said first chamber (43) of the servocontrol pneumatic cylinder (14), the first chamber (36) also being connectible to the atmosphere and the movable partition (40) actuating an on-off valve (42a, 58a) in the discharge line (26) of the hydraulic circuit of the solenoid valve (22) and a piston pump (42, 56 ) for pressurising the said discharge line (26),

- a hydro-pneumatic regulator (66) inserted in the connection between the first chamber (43) of the pneumatic vacuum cylinder (14) and the atmosphere and piloted by the master cylinder (10),

- a solenoid valve (52) of the pneumatic circuit that controls the communication between the chambers (36, 38) of the pneumatic cylinder (34) of the pneumo-hydraulic actuator (32) and the first chamber (43) of the servocontrol pneumatic cylinder (14), as well as the communication between the first chamber (36) of the pneumatic cylinder (34) of the pneumo-hydraulic actuator (32) and the hydro-pneumatic regulator (66), the solenoid valve (52) being piloted by the said electronic control unit (28) following the initial interruption of the braking action effected by the solenoid valve (22) of the hydraulic circuit between a first position in which the hydro-pneumatic regulator (66) is isolated from the pneumatic cylinder (34) of the pneumo-hydraulic actuator (32) so as to keep the on-off valve (42a, 58a) open, and a second position in which the communication between the hydro-pneumatic regulator (66) and the first chamber (36) of the pneumatic cylinder (34) of the pneumo-hydraulic actuator (32) is opened to allow the closure of the on-off valve (42a, 58a) and the operation of the piston pump (42, 56).


**Patentansprüche**

1. Hydraulischer Bremskreis mit pneumatischer Unterdruck-Servosteuerung für Motorfahrzeugräder, mit einem Hauptzylinder (10), der mit Bremsen (F) verbunden ist und mittels eines (12) Pedals durch einen Pneumatik-Unterdruckzylinder (14) betätigt wird, welcher eine erste Kammer (43), die mit einer Unterdruckquelle (D) verbunden ist, und eine zweite Kammer (44) aufweist, die normalerweise mit der ersten Kammer (43) in Verbindung steht und so angeordnet ist, daß sie von der ersten Kammer isoliert ist und auf die Betätigung des Bremspedals (12) hin in Verbindung mit der Atmosphäre zu bringen ist, wobei der hydraulische Kreis einen zugeordneten Blockierverhinderer für die Räder hat, der ein Magnetventil (22) enthält, das zwischen dem Hauptzylinder (10) und den Bremsen (F) liegt und vorgesehen ist, um für den Fall, daß die Räder blockieren sollten, die Bremsbetätigung vorübergehend zu unterbrechen und den hydraulischen Kreis mit einer Entladeleitung (26) zu verbinden, wobei das Magnetventil (22) durch eine elektronische Steuereinheit (28) gesteuert wird, der ein Mittel (30) zum Abtasten der Drehzahl der Räder zugeordnet ist, dadurch gekennzeichnet, daß der Blockierverhinderer einen pneumo-hydraulischen Betätiger (32) enthält, der in die Entladeleitung (26) des Magnetventils (22) des hydraulischen Kreises eingefügt ist und durch die elektronische Steuereinheit (28) über einen pneumatischen Kreis betätigt wird, welcher mit dem pneumatischen Servosteuerungs-Unterdruckzylinder (14) verbunden ist, um nach der anfänglichen Unterbrechung der Bremsbetätigung durch das Magnetventil (22) Zyklen des Bremsens und der Bremsenfreigabe mittels des Schließens und Unterdrucksetzens der Entladeleitung (26) und des Öffnens der Entladeleitung (26) zu erreichen.

2. Kreis nach Anspruch 1, dadurch gekennzeichnet, daß der pneumo-hydraulis Betätiger enthält:

- einen pneumatischen Unterdruckzylinder (34), der durch eine bewegbare Trennwand (40) in eine erste und eine zweite Kammer (36, 38) unterteilt ist, die mit der ersten Kammer (43) des pneumatischen Servosteuerungs-Zylinders (14) verbunden sind, wobei die erste Kammer (36) des Zylinders (34) des pneumo-hydraulischen Betätigers (32) mit der zweiten Kammer (44) des pneumatischen Servosteuerungs-Zylinders ( 14) verbindbar ist und die bewegbare Trennwand (40) ein Ein/Aus-Ventil (42a, 58a) in der Entladeleitung (26) des Magnetventils (22) sowie eine Kolbenpumpe (42, 56) zum Unterdrucksetzen der Entladeleitung (26) betätigt, und

- ein Magnetventil (52) des pneumatischen Kreises, das die Verbindung zwischen den Kammern (36, 38) des pneumatischen Zylinders (34) des pneumo-hydraulischen Betätigers (32) und dem pneumatischen Servosteuerungs-Zylinder (14) steuert und durch die elektronische Steuereinheit (28) folgend auf die anfängliche Unterbrechung der Bremsenbetätigung gesteuert wird, welche durch das Magnetventil (22) des hydraulischen Kreises zwischen einer ersten Position, in der die zweite Kammer (44) des pneumatischen Servosteuerungs-Zylinders (14) von dem pneumatischen Zylinder (34) des pneumo-hydraulischen Betätigers (32) getrennt ist, um das Ein/Aus-Ventil (42a, 58a) offenzuhalten, und einer zweiten Position, in der die Verbindung zwischen der zweiten Kammer (44) des pneumatischen Servosteuerungs-Zylinders (14) und der ersten Kammer (36) des pneumatischen Zylinders (34) des pneumo-hydraulischen Betätigers (32) geöffnet ist, um die Schließung des Ein/Aus-Ventils (42a, 58a) und die Betätigung der Kolbenpumpe (42, 56) zu gestatten, bewirkt wird.

3. Kreis nach Anspruch 1, dadurch gekennzeichnet, daß der pneumo-hydraulische

Betätiger (32) enthält:
- einen pneumatischen Unterdruckzylinder (34), der durch eine bewegbare Trennwand (40) in eine erste und eine zweite Kammer (36, 38) unterteilt ist, die mit der ersten Kammer (43) des pneumatischen Serovsteuerungs-Zylinders (14) verbunden sind, wobei die erste Kammer (36) auch mit der Atmosphäre verbindbar ist und die bewegbare Trennwand (40) ein Ein/Aus-Ventil (42a, 58a) in der Entladeleitung (26) des hydraulischen Kreises des Magnetventils (22) sowie eine Kolbenpumpe (42, 56) zum Unterdrucksetzen der Entladeleitung (26) betätigt,
- einen hydro-pneumatischen Regler (66), der in die Verbindung zwischen der ersten Kammer (43) des pneumatischen Unterdruck-Zylinders (14) und der Atmosphäre eingefügt ist und durch den Hauptzylinder (10) gesteuert wird,
- ein Magnetventil (52) des pneumatischen Kreises, das sowohl die Verbindung zwischen den Kammern (36, 38) des pneumatischen Zylinders (34) des pneumo-hydraulischen Betätigers (32) und der ersten Kammer (43) des pneumatischen Servosteuerungs-Zylinders (14) als auch die Verbindung zwischen der ersten Kammer (36) des pneumatischen Zylinders (34) des pneumo-hydraulischen Betätigers (32) und dem hydro-pneumatischen Regler (66) steuert, wobei das Magnetventil (52) durch die elektronische Steuereinheit (28) folgend auf die anfängliche Unterbrechung der Bremsbetätigung gesteuert wird, die durch das Magnetventil (22) des hydraulischen Kreises zwischen einer ersten Position, in welcher der hydro-pneumatische Regler (66) von dem pneumatischen Zylinder (34) des pneumo-hydraulischen Betätigers (32) getrennt ist, um so das Ein/Aus-Ventil (42a, 58a) offenzuhalten, und einer zweiten Position, in welcher die Verbindung zwischen dem hydro-pneumatischen Regler (66) und der ersten Kammer (36) des Pheumatischen Zylinders (34) des pneumo-hydralischen Betätigers (32) geöffnet ist, um die Schließung des Ein/Aus-Ventils (42a, 58a) und die Betätigung der Kolbenpumpe (42, 56) zu gestatten, bewirkt wird.

## Revendications

1. Circuit de freinage hydraulique avec servofrein pneumatique à dépression pour les roues du véhicule à moteur, comprenant un maître-cylindre (10) relié aux freins (F) et actionné au moyen d'une pédale (12) par l'intermédiaire d'un cylindre pneumatique à dépression (14) possédant une première chambre (43) reliée à une source de dépression (D) et une deuxième chambre (44) communiquant normalement avec la première chambre (43) et prévue pour être isolée de la première chambre et mise en communication avec l'atmosphère lors de l'actionnement de la pédale de frein (12), et dans lequel le circuit hydraulique possède un dispositif antiblocage associé pour les roues, comprenant une électrovalve (22) interposée entre le maître-cylindre (10) et les freins (F) et conçue pour interrompre temporairement l'action de freinage et relier le circuit hydraulique à un conduit d'évacuation (26) si les roues se bloquent, l'électrovalve (22) étant pilotée par une unité de commande électronique (28) associée à des moyens (30) pour détecter la vitesse de rotation des roues, caractérisé en ce que le dispositif antiblocage comprend un actionneur pneumo-hydraulique (32) branché dans la conduite d'évacuation (26) de l'électrovalve (22) du circuit hydraulique et actionné par l'unité de commande électronique (28) par l'intermédiaire d'un circuit pneumatique relié au cylindre pneumatique à dépression de servofrein (14), de manière à réaliser, après l'interruption initiale de l'action de freinage par l'électrovalve (22), des cycles de freinage et de relâchement du freinage au moyen de la fermeture et pressurisation du conduit d'évacuation (26) et de l'ouverture du conduit d'évacuation (26).

2. Circuit selon la revendication 1, caractérisé en ce que l'actionneur pneumo-hydraulique comprend:
- un cylindre pneumatique à dépression (34) qui est divisé par une séparation mobile (40) en des première et deuxième chambres (36, 38) reliées à la première chambre (43) du cylindre pneumatique de servofrein (14), la première chambre (36) du cylindre (34) de l'actionneur pneumo-hydraulique (32) pouvant être reliée à la deuxième chambre (44) du cylindre pneumatique de servofrein (14), et la séparation mobile (40) actionnant une valve marche/arrêt (42a, 58a) dans le conduit d'évacuation (26) de l'électrovalve (22), et une pompe à piston (42, 56) pour pressuriser le conduit d'évacuation (26),
- une électrovalve (52) du circuit pneumatique, qui commande la communication entre les chambres (36, 38) du cylindre pneumatique (34) de l'actionneur pneumo-hydraulique (32) et le cylindre pneumatique de servofrein (14), et qui est pilotée par l'unité de commande électronique (28), à la suite de l'interruption initiale de l'action de freinage réalisée par l'électrovalve (22) du circuit hydraulique, entre une première position à laquelle la deuxième chambre (44) du cylindre pneumatique de servofrein (14) est isolée du cylindre pneumatique (34) de l'actionneur pneumo-hydraulique (32) de manière à maintenir la valve marche/arrêt (42a, 58a) ouverte, et une deuxième position à laquelle la communication entre la deuxième chambre (44) du cylindre pneumatique de servofrein (14) et la première chambre (36) du cylindre pneumatique (34) de l'actionneur pneumo-hydraulique (32) est ouverte, pour permettre la fermeture de la valve marche/arrêt (42a, 58a) et le fonctionnement de la pompe à piston (42, 56).

3. Circuit selon la revendication 1, caracterisé en ce que l'actionneur pneumo-hydraulique (32) comprend:
- un cylindre pneumatique à dépression (34) divisé par une séparation mobile (40) en des premières et deuxième chambres (36, 38) reliées à la première chambre (43) du cylindre pneumatique de servofrein (14), la première chambre (36) pouvant également être reliée à l'atmosphère, et la séparation mobile (40) actionnant une valve marche/arrêt (42a, 58a) dans la conduite d'évacuation (26) du circuit hydraulique de l'électrovalve (22), et une pompe à piston (42, 56) pour pressuriser le conduit d'évacuation (26),

- un régulateur hydro-pneumatique (66) inséré dans le raccord entre la première chambre (43) du cylindre pneumatique à dépression (14) et l'atmosphère, et piloté par le maître-cylindre (10),

- une électrovalve (52) du circuit pneumatique, qui commande la communication entre les chambres (36, 38) du cylindre pneumatique (34) de l'actionneur pneumo-hydraulique (32) et la première chambre (43) du cylindre pneumatique de servofrein (14), ainsi que la communication entre la première chambre (36) du cylindre pneumatique (34) de l'actionneur pneumo-hydraulique (32) et le régulateur hydro-pneumatique (66), l'électrovalve (52) étant pilotée par l'unité de commande électronique (28), à la suite de l'interruption initiale de l'action de freinage réalisée par l'électrovalve (22) du circuit hydraulique, entre une première position à laquelle le régulateur hydro-pneumatique (66) est isolé du cylindre pneumatique (34) de l'actionneur pneumo-hydraulique (32) de manière à maintenir la valve marche/arrêt (42a, 58a) ouverte, et une deuxième position à laquelle la communication entre le régulateur hydro-pneumatique (66) et la première chambre (36) du cylindre pneumatique (34) de l'actionneur pneumo-hydraulique (32) est ouverte, pour permettre la fermeture de la valve marche/arrêt (42a, 58a) et le fonctionnement de la pompe à piston (42, 56).

# FIG. 1

# FIG. 2

## FIG. 3